# EUROPÄISCHE PATENTSCHRIFT

(11) **EP 3 154 738 B1**
(45) Veröffentlichungstag und Bekanntmachung des Hinweises auf die Patenterteilung: **02.09.2020**
(21) Anmeldenummer: 15727580.1
(22) Anmeldetag: 21.05.2015
(51) Int. Cl.: B23K 20/02, B23K 26/02, B23K 26/26

(54) **VERFAHREN ZUM VERSCHWEISSEN ZWEIER BAUTEILE MIT EINER WÄRMEQUELLE ; ENTSPRECHENDER BAUTEILEVERBUND**
METHOD FOR WELDING TWO COMPONENTS AND COMPONENT ASSEMBLY
PROCÉDÉ POUR SOUDER DEUX PIÈCES ENSEMBLE ET PIÈCE COMPOSITE AINSI OBTENUE

(30) Priorität: 13.06.2014 DE 102014211337
(43) Veröffentlichungstag der Anmeldung: 19.04.2017
(73) Patentinhaber: Robert Bosch GmbH, 70442 Stuttgart (DE)
(72) Erfinder: LIST, Matthias, 75328 Schoemberg (DE); GRIMM, Alexander, 85757 Karlsfeld (DE)
(86) Internationale Anmeldenummer: PCT/EP2015/061283
(87) Internationale Veröffentlichungsnummer: WO 2015/189020

(56) Entgegenhaltungen:
- DE-A1-102009 016 799
- JP-A- S5 890 385
- JP-A- S6 186 084
- JP-A- H09 108 848
- JP-A- S60 210 381
- JP-A- 2004 042 134
- US-A- 3 821 842
- US-A1- 2011 042 361

## Beschreibung

### Stand der Technik

Die Erfindung betrifft ein Verfahren zum Verschweißen zweier Bauteile nach dem Oberbegriff des Anspruchs 1. Ferner betrifft die Erfindung einen Bauteilverbund als Zwischenprodukt gemäß dem Oberbegriff des Anspruchs 5. JP 2004 042134 A offenbart solche Obergriffe.

Ein Verfahren nach dem Oberbegriff des Anspruchs 1 ist als sogenanntes Diffusionsschweißverfahren aus dem Stand der Technik bereits bekannt. Bei dem Diffusionsschweißverfahren werden zwei Bauteile mit einander gegenüberliegenden, ebenen Fügeflächen mit einer hohen Kraft gegeneinander gepresst, wobei die beiden Bauteile gleichzeitig auf eine Temperatur unterhalb der Schmelztemperatur der Materialien der beiden Bauteile erwärmt werden. Der zur Ausübung des Diffusionsschweißverfahrens erforderliche Druck auf die Fügeflächen der Bauteile liegt dabei üblicherweise in der Größenordnung der Fließgrenze des Materials der Bauteile. Das Diffusionsschweißverfahren zeichnet sich dadurch aus, dass die erforderliche Temperatur zum Verbinden der beiden Bauteile umso geringer ist, je ebener bzw. glatter die Fügeflächen der Bauteile ausgebildet sind. Durch das Diffusionsschweißverfahren können in der Qualität hochwertige Schweißverbindungen hergestellt werden. Nachteilig dabei ist, dass sich mittels des Diffusionsschweißverfahrens nicht alle Materialien bzw. Materialkombinationen miteinander verbinden lassen.

Weiterhin sind aus dem Stand der Technik Schmelzschweißverfahren bekannt, bei denen die beiden Bauteile im Bereich der auszubildenden Schweißnaht auf eine Temperatur oberhalb der Schmelztemperatur erwärmt werden. Auch das Schmelzschweißverfahren hat den Nachteil, dass nicht alle metallischen Materialien oder Materialkombinationen sich miteinander verschweißen lassen. Beispielsweise gibt es Materialien oder Materialkombinationen, die aufgrund ihrer Rissneigung, ihrer Neigung zur Porenbildung und/oder ihrer Neigung zur Bildung von intermetallischen Phasen nicht mit klassischen Schmelzschweißverfahren oder nur mit zusätzlichem Aufwand (z.B. Zusatzmaterial) geschweißt werden können. Beispiele hierfür sind Kupfer-Aluminium-Verbindungen, Nickelwerkstoffe und deren Kombinationen, Aluminiumknetlegierungen und deren Kombinationen, Aluminium-Druckguss-Legierungen und deren Kombinationen, Verbindungen von Edelmetallen, bestimmte Stahlwerkstoffe und deren Kombinationen, insbesondere hochlegierte und/oder hochfeste Stähle usw.

Aus der Patentschrift US3821842 ist es bekannt, dass zwei miteinander zu verschweißende Drahtenden nach Entfernung einer äußeren, aus Kupfer bestehenden Schicht stumpf gegeneinander gepresst werden, wodurch eine radial umlaufende Wulst entsteht, die anschließend entfernt wird, um zuletzt wiederum eine Isolierung aufbringen zu können.

In einer Ausführung der Offenlegungsschrift JPS60/210381 ist es vorgesehen, dass zwei Bauteile über die gesamte Stirnfläche mittels einer Schweißnaht miteinander verbunden sind. Lediglich der radial überstehende Bereich wird anschließend entfernt. Dieses Entfernen ist jedoch allein aus geometrischen Gründen vorgesehen, und nicht aus Gründen einer Homogenität des Verbindungsbereichs der beiden Bauteile, da die Homogenität durch die über die gesamte Querschnittsfläche der beiden Bauteile reichende Verschweißung bereits existiert.

Die Offenlegungsschrift US2011/042361A zeigt eine Fügeanordnung von zwei Bauteilen, welche in einem Fügespalt von einem ursprünglich geschmolzenen und dann verfestigten Fügematerial gehalten ist. Über die Höhe des Fügespaltes ist in einem unteren Fügebereich ein erstes Füllmaterial angeordnet, auf welches dann anschließend unter Ausbildung eines oberen Fügebereichs ein zweites Füllmaterial als das Fügematerial angeordnet ist.

Aus der Offenlegungsschrift JPH09108848 ist es bekannt zwei sehr dünne Zuschnitte miteinander zu verschweißen. Hierbei wird eine Anordnung ausgebildet, bei welcher die Zuschnitte in einem jeweiligen Kantenabschnitt aneinanderstoßen. Oberhalb der Stoßstelle wird ein weiteres Bandmaterial auf die beiden Zuschnitte aufgelegt. Auf das Bandmaterial wird dann auf der der Stoßstelle abgewandten Bandseite ein Elektronenstrahl gerichtet. Durch einen Schmelzvorgang werden die Zuschnitte im Bereich der Stoßstelle miteinander verbunden.

Die Offenlegungsschrift JPS6186084 zeigt das Verschweißen von zwei Bauteilen in einem Schweißbereich. Im Schweißbereich weisen beide Bauteile eine Erhebung auf, die von einer übrigen Bauteiloberfläche jeweils absteht. Durch einen Elektronenstrahl wird das Material der Bauteile im Schweißbereich geschmolzen, wodurch sich bis zur Erhebung eine durchgehende Schweißnaht ausbildet.

### Offenbarung der Erfindung

Ausgehend von dem dargestellten Stand der Technik liegt der Erfindung die Aufgabe zugrunde, ein Verfahren zum Verbinden zweier Bauteile nach bisher bekanntem Stand der Technik derart weiterzubilden, dass es zum einen bei einer Vielzahl, mit konventionellen Diffusionsschweißverfahren bzw. Schmelzschweißverfahren nicht verschweißbaren Materialien oder Materialkombinationen eingesetzt werden kann und darüber hinaus einen vorrichtungstechnisch relativ geringen Aufwand benötigt.

Diese Aufgabe wird erfindungsgemäß bei einem Verfahren zum Verschweißen zweier Bauteile mit den Merkmalen des Anspruchs 1 dadurch gelöst, dass die beiden Bauteile im Bereich der beiden Fügeflächen mittels einer Wärmequelle lediglich über einen Teilbereich der Höhe bzw der Dicke der Bauteile aufgeschmolzen werden. Mit anderen Worten gesagt bedeutet dies, dass das erfindungsgemäße Schweißverfahren eine Kombination des an sich bekannten Diffusionsschweißverfahrens ist, bei dem die beiden Bauteile mit einer bestimmten Kraft im Bereich ihrer beiden Fügeflächen gegeneinander gepresst werden, und des Schmelzschweißverfahrens, bei dem das Material der Bauteile aufgeschmolzen wird. Ein derartiges erfindungsgemäßes Verfahren ermöglicht es auf überraschende Weise, die oben beim Stand der Technik angeführten Nachteile zu überwinden und insbesondere Verbindungen zwischen Bauteilen herzustellen, die aus Materialien bestehen, die ansonsten nicht miteinander verschweißbar sind.

Das erfindungsgemäße Verfahren sieht ferner vor, dass der Bereich, in dem die beiden Bauteile aufgeschmolzen sind, nach dem Erstarren entfernt wird. Ein derartiges Verfahren hat insbesondere den Vorteil, dass sich besonders hochwertige, insbesondere ebene Bauteileoberflächen erzielen lassen, und dass die Verbindung im Bereich der beiden Fügeflächen über die gesamte Dicke der Bauteile im Wesentlichen homogen ausgebildet ist.

Vorteilhafte Weiterbildungen des erfindungsgemäßen Verfahrens sind in den Unteransprüchen aufgeführt.

In bevorzugter Ausgestaltung des erfindungsgemäßen Verfahrens ist es in einer ersten Variante vorgesehen, dass die Erwärmung der beiden Bauteile im Bereich der beiden Fügeflächen mittels einer elektromagnetischen Strahlungsquelle erfolgt. Unter einer elektromagnetischen Strahlungsquelle wird insbesondere eine Laserstrahlquelle, eine Elektronenstrahlquelle, eine Infrarotstrahlungsquelle oder ähnliches verstanden. Vorzugsweise wird das erfindungsgemäße Verfahren mittels einer Laserstrahlquelle durchgeführt, da sich ein Laserstrahl hochgenau in das Material der beiden Fügeflächen einkoppeln und prozesstechnisch darüber hinaus besonders gut überwachen lässt.

In alternativer Ausgestaltung des Verfahrens kann die Erwärmung auch im Schmelzschweißverfahren erfolgen.

Besonders bevorzugt ist die Verwendung des Verfahrens bei Bauteilen, die aus unterschiedlichen Materialien bestehen. Insbesondere ist dabei an Kupfer-Aluminium-Verbindungen gedacht, wie sie beispielsweise bei Anwendungen der Elektromobilität, bei elektrischen Antrieben, bei Energiespeichern bzw. Batterien und bei Hochleistungselektroniken verwendet werden. Das erfindungsgemäße Verfahren hat dabei den Vorteil, dass beispielsweise Kupferbauteile durch leichtere Aluminiumbauteile ersetzt werden können. Ein weiterer Einsatz der Erfindung besteht bei Aluminium-Verbindungen, insbesondere bei heißrisskritischen Legierungen, z. B. Legierungen der 6xxx-Serie. Auch sind damit Schweißnähte an Gusslegierungen herstellbar, die ansonsten beim Schmelzschweißverfahren zur Porenbildung neigen. Eine weitere Einsatzmöglichkeit besteht bei Stahlwerkstoffen und deren Kombinationen.

Insbesondere eignet sich das Verfahren für hochlegierte und/oder hochfeste Stähle, die zur Heißrissbildung beim Schmelzschweißen neigen. Auch hochkohlenstoffhaltige Stahlwerkstoffe, die beim Schmelzschweißverfahren zur Aufhärtung und Versprödung und damit zur Kaltrissbildung neigen, können mit dem erfindungsgemäßen Verfahren in vorteilhafter Art und Weise miteinander verschweißt werden. Derartige, aus Stahlwerkstoffen hergestellte Bauteile finden beispielsweise als Ventil- oder Düsenbauteile in der Kraftfahrzeugindustrie Verwendung.

Die Erfindung umfasst auch einen Bauteilverbund entsprechend dem Anspruch 5.

Zur Erzeugung einer nach dem Entfernen des erhöhten Bereichs ebenen bzw. glatten Oberseite an den beiden Bauteilen im Verbindungsbereich ist es vorgesehen, dass die beiden Bauteile in dem Verbindungsbereich eine ebene Oberseite aufweisen, von dem der erhöhte Bereich absteht.

Weitere Vorteile, Merkmale und Einzelheiten der Erfindung ergeben sich aus der nachfolgenden Beschreibung bevorzugter Ausführungsbeispiele sowie anhand der Zeichnung.

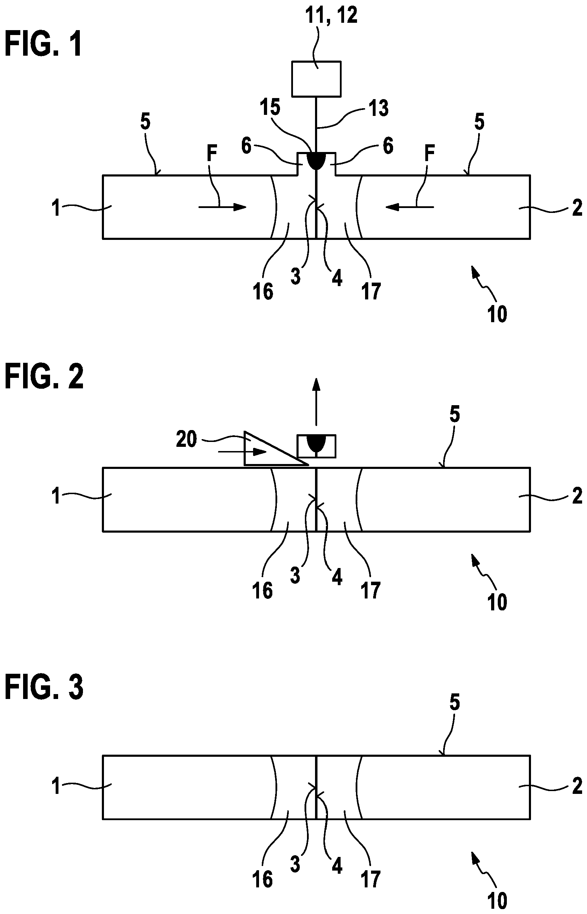

Diese zeigt in den Fig. 1 bis Fig. 3 den Verbindungsbereich eines Bauteileverbunds zwischen zwei Bauteilen während verschiedener Phasen des erfindungsgemäßen Verfahrens zum Verbinden der beiden Bauteile, jeweils im Längsschnitt.

Gleiche Bauteile bzw. Bauteile mit gleicher Funktion sind in den Figuren mit den gleichen Bezugsziffern versehen.

In den Fig. 1 bis 3 ist ein aus zwei Bauteilen 1, 2 bestehender Bauteileverbund 10 dargestellt, wobei die Bauteile 1, 2 mittels des erfindungsgemäßen Schweißverfahrens miteinander verbunden werden. Die beiden Bauteile 1, 2 können entweder aus dem gleichen Material, oder aber aus unterschiedlichen Materialen bestehen. Vorzugsweise ist die Verwendung von metallischen Materialen bzw. Werkstoffen vorgesehen.

Die beiden Bauteile 1,2, deren Form im Wesentlichen für die Anwendung des erfindungsgemäßen Verfahrens ohne Bedeutung ist, weisen zwei gegenüberliegend und in Anlagekontakt zueinander angeordnete Fügeflächen 3, 4 auf, die möglichst glatt bzw. eben ausgebildet sind. Durch eine oder mehrere nicht gezeigte Einrichtungen werden die beiden Bauteile 1, 2 im Bereich ihrer Fügeflächen 3, 4 mit einer Kraft F, die insbesondere senkrecht zu den Fügeflächen 3, 4 verläuft, gegeneinander gepresst. Die Kraft F erzeugt in den Bauteilen 1, 2 bzw. den Fügeflächen 3, 4 einen entsprechenden Druck bzw. eine Flächenpressung. Die Höhe der Kraft F hängt insbesondere vom verwendeten Material der beiden Bauteile 1, 2, von der Oberflächenrauhigkeit im Bereich der Fügeflächen 3, 4 und anderen Faktoren ab und kann dabei im Bereich der Fließgrenze des Materials der Bauteile 1, 2 liegen.

Die beiden Bauteile 1, 2 weisen gemäß der Erfindung auf ihrer ansonsten ebenen und in einer Ebene liegenden Oberseite 5 jeweils einen erhöhten Bereich 6 auf, der steg- bzw. leistenförmig ausgebildet ist, wobei sich der erhöhte Bereich 6 im Wesentlichen senkrecht zur Zeichenebene der Fig. 1 bis 3 als Teil der Fügeflächen 3, 4 erstreckt. Im Ausführungsbeispiel weist der Bereich 6 einen rechteckförmigen Querschnitt auf. In den erhöhten Bereich 6 wird gemäß der Erfindung mittels einer Wärmequelle 11, im dargestellten Ausführungsbeispiel mittels einer elektromagnetischen Strahlungsquelle in Form einer Laserstrahleinrichtung 12, eine Wärmeenergie eingekoppelt, beispielsweise mittels eines Laserstrahls 13. Der Laserstrahl 13 führt zum Aufschmelzen des Materials der beiden Bauteile 1, 2 im Bereich des erhöhten Bereichs 6, d.h., dass ein Schmelzbad 15 über einen Teilbereich der Breite des Bereichs 6 ausgebildet wird, wobei sich das Schmelzbad 15 infolge einer Relativbewegung zwischen dem Laserstrahl 13 und den Bauteilen 1, 2 senkrecht zur Zeichenebene der Fig. 1 erstreckt. Wesentlich dabei ist, dass das Aufschmelzen des Materials des erhöhten Bereichs 6 durch den Laserstrahl 13 während der Kraftbeaufschlagung der beiden Fügeflächen 3, 4 erfolgt, und dass die Ausbildung des Schmelzbads 15 gemäß der Erfindung lediglich über einen Teilbereich der Höhe bzw. der Dicke der beiden Bauteile 1, 2, im Ausführungsbereich lediglich im Bereich 6, erfolgt. Durch das Schmelzbad 15 bzw. die eingekoppelte Wärmeenergie wird über die gesamte Höhe der beiden Bauteile 1, 2 beidseitig der Fügeflächen 3, 4 eine Wärmeeinflusszone 16, 17 ausgebildet, die in Folge der Krafteinwirkung ein inniges Verbinden des Materials der beiden Bauteile 1, 2 im Bereich der Fügeflächen 3, 4 auf atomarer Ebene ermöglicht.

Nach dem Abkühlen der Bauteile 1, 2 wird mittels einer Einrichtung 20, beispielsweise mittels eines Fräsers, einer Schleifvorrichtung oder ähnlichem der erhöhte Bereich 6 von der Oberfläche der beiden Bauteile 1, 2 spanend entfernt, so dass sich insgesamt gesehen an dem Bauteileverbund 10 eine im Wesentlichen ebene Oberseite 5 ergibt. In der Fig. 3 ist der Bauteileverbund 10 nach dem Entfernen des erhöhten Bereichs 6 erkennbar. Insbesondere ist dabei erkennbar, dass mit dem erhöhten Bereich 6 gleichzeitig auch die Zone des Schmelzbades 15 entfernt wurde.

## Patentansprüche

1. Verfahren zum Verschweißen zweier Bauteile (1, 2), bei dem zwei in Anlagekontakt stehende Fügeflächen (3, 4) der beiden Bauteile (1, 2) durch Aufbringen einer Kraft (F) gegeneinander gepresst werden,
**dadurch gekennzeichnet, dass**
die beiden Bauteile (1, 2) jeweils eine ebene und in einer Ebene liegende Oberseite (5) aufweisen, auf welcher in einem Einkoppelbereich einer Wärmequelle (11) zur Ausbildung eines Schmelzbereiches (15) ein gegenüber benachbarten Bereichen der Oberseite (5) erhöhter Bereich (6) ausgebildet ist, wobei in dem erhöhten Bereich (6) mittels der Wärmequelle (11) eine Wärmeenergie eingekoppelt wird, wodurch die beiden Bauteile (1, 2) erwärmt werden und die beiden Bauteile (1, 2) im erhöhten Bereich (6) und lediglich über einen Teilbereich der Höhe bzw. der Dicke der Bauteile (1, 2) unter Ausbildung eines Schmelzbades (15) aufgeschmolzen werden, wobei durch das Schmelzbad (15) und die eingekoppelte Wärmeemergie über die gesamte Höhe der beiden Bauteile (1, 2) beidseitig der Fügeflächen 3, 4 eine Wärmeeinflusszone 16, 17 ausgebildet wird, so dass in Folge der Krafteinwirkung das Material der beiden Bauteile (1, 2) im Bereich der Fügeflächen (3, 4 auf atomarer Ebene innig verbunden wird, und wobei nach einem Abkühlen der Bauteile (1, 2) der erhöhte Bereich (6) entfernt wird.

2. Verfahren nach Anspruch 1,
**dadurch gekennzeichnet,**
**dass** die Erwärmung mittels einer elektromagnetischen Strahlungsquelle erfolgt.

3. Verfahren nach Anspruch 1,
**dadurch gekennzeichnet,**
**dass** die Erwärmung im Schmelzschweißverfahren erfolgt.

4. Verfahren nach einem der Ansprüche 1 bis 3,
**dadurch gekennzeichnet,**
**dass** die beiden Bauteile (1, 2) aus unterschiedlichen Materialien bestehen.

5. Bauteileverbund (10) als Zwischenprodukt erhalten während dem Durchführen eines Verfahrens nach einem der Ansprüche 1 bis 4, wobei die beiden Bauteile (1, 2) des Bauteileverbunds (10) zwei gegenüberliegende und in Anlagenkontakt zueinander angeordnete Fügeflächen (3) und jeweils eine ebene und in einer Ebene liegende Oberseite (5) aufweisen,
**dadurch gekennzeichnet, dass** auf der Oberseite (5)
in einem Einkoppelbereich einer Wärmequelle (11) zur Ausbildung eines Schmelzbereiches (15) ein gegenüber benachbarten Bereichen der Oberseite (5) erhöhter Bereich (6) ausgebildet ist, wobei im erhöhten Bereich (6) und lediglich über einen Teilbereich der Höhe bzw. der Dicke der beiden Bauteile (1, 2) eine Zone eines erkühlten Schmelzbades (15) ausgebildet ist und wobei über die gesamte Höhe der beiden Bauteile (1, 2) ein inniges Verbinden des Materials der beiden Bauteile (1, 2) im Bereich der Fügeflächen (3, 4) auf atomarer Ebene vorliegt.

6. Bauteileverbund nach Anspruch 5,
**dadurch gekennzeichnet,**
**dass** die Breite des Schmelzbereichs (15) schmaler ist als der erhöhte Bereich (6).

7. Bauteileverbund nach einem der Ansprüche 5 bis 7,
**dadurch gekennzeichnet,**
**dass** der erhöhte Bereich (6) leisten- bzw. stegförmig ausgebildet ist.

## Claims

1. Method for welding two components (1, 2), in which two joining surfaces (3, 4) of the two components (1, 2) in abutting contact with one another are pressed against one another by applying a force (F), **characterized in that** the two components (1, 2) respectively have an upper side (5), which is planar and lies in a plane and on which a region (6) that is elevated in comparison with adjacent regions of the upper side (5) is formed in a coupling-in region of a heat source (11) to form a melting region (15), wherein, in the elevated region (6), a thermal energy is coupled in by means of the heat source (11), whereby the two components (1, 2) are heated and the two components (1, 2) are melted in the elevated region (6) and only over a partial region of the height or the thickness of the components (1, 2) to form a molten bath (15), wherein the molten bath (15) and the coupled-in thermal energy has the effect that a heat influencing zone (16, 17) is formed on both sides of the joining surfaces (3, 4) over the entire height of the two components (1, 2), so that as a consequence of the action of the force the material of the two components (1, 2) is intimately bonded at the atomic level in the region of the joining surfaces (3, 4), and wherein, after the cooling down of the components (1, 2), the elevated region (6) is removed.

2. Method according to Claim 1,
**characterized**
**in that** the heating takes place by means of an electromagnetic radiation source.

3. Method according to Claim 1,
**characterized**
**in that** the heating takes place by the fusion welding method.

4. Method according to one of Claims 1 to 3,
**characterized**
**in that** the two components (1, 2) consist of different materials.

5. Composite component assembly (10) obtained as an intermediate product while carrying out the method according to one of Claims 1 to 4, wherein the two components (1, 2) of the composite component assembly (10) have two joining surfaces (3), which are arranged lying opposite one another and in abutting contact with one another and respectively have an upper side (5), which is planar and lies in a plane, **characterized in that** on the upper side (5) a region (6) that is elevated in comparison with adjacent regions of the upper side (5) is formed in a coupling-in region of a heat source (11) to form a melting region (15), wherein, in the elevated region (6) and only over a partial region of the height or the thickness of the two components (1, 2), a zone of a cooled molten bath (15) is formed, and wherein there is an intimate bonding of the material of the two components (1, 2) at the atomic level in the region of the joining surfaces (3, 4) over the entire height of the two components (1, 2).

6. Composite component assembly according to Claim 5,
**characterized**
**in that** the width of the molten region (15) is narrower than the elevated region (6).

7. Composite component assembly according to one of Claims 5 to 7,
**characterized**
**in that** the elevated region (6) is formed as a ridge or web.

## Revendications

1. Procédé de soudage de deux composants (1, 2), dans lequel deux surfaces de jonction (3, 4), en contact d'appui, des deux composants (1, 2) sont pressées l'une contre l'autre par application d'une force (F),
**caractérisé en ce que**
les deux composants (1, 2) comportent chacun un côté supérieur plat (5), situé dans un plan, sur lequel une zone surélevée (6) par rapport à des zones adjacentes du côté supérieur (5) est formée dans une zone d'injection par couplage d'une source de chaleur (11) pour former une zone de fusion (15), de l'énergie thermique étant injectée par couplage dans la zone surélevée (6) au moyen de la source de chaleur (11) de manière à chauffer les deux composants (1, 2) et à faire fondre les deux composants (1, 2) dans la zone surélevée (6) et seulement sur une partie de la hauteur ou de l'épaisseur des composants (1, 2) pour former un bain de fusion (15), une zone affectée thermiquement (16, 17) étant formée des deux côtés des surfaces de jonction (3, 4) sur toute la hauteur des deux composants (1, 2) par le bain de fusion (15) et l'énergie thermique injectée par couplage de manière à ce que, sous l'action d'une force, le matériau des deux composants (1, 2) soit intimement lié au niveau atomique dans la région des surfaces de jonction (3, 4), et la zone surélevée (6) étant supprimée après refroidissement des composants (1, 2).

2. Procédé selon la revendication 1,
**caractérisé en ce que**
le chauffage est effectué au moyen d'une source de rayonnement électromagnétique.

3. Procédé selon la revendication 1,
**caractérisé en ce que**
le chauffage est effectué dans le procédé de soudage par fusion.

4. Procédé selon l'une des revendications 1 à 3,
**caractérisé en ce que**
les deux composants (1, 2) comprennent des matériaux différents.

5. Ensemble de composants (10) obtenu comme produit intermédiaire lors de la mise en œuvre d'un procédé selon l'une des revendications 1 à 4, les deux composants (1, 2) de l'ensemble de composants (10) comportant deux surfaces de jonction opposées (3), en contact d'appui l'une avec l'autre et comportant chacun un côté supérieur plat (5) situé dans un plan,
**caractérisé en ce que** sur le côté supérieur (5)
une zone surélevée (6) par rapport à des zones adjacentes du côté supérieur (5) est formée dans une zone d'injection par couplage d'une source de chaleur (11) pour former une zone de fusion (15), une zone d'un bain fondu refroidi (15) étant formée dans la zone surélevée (6) et seulement sur une partie de la hauteur ou de l'épaisseur des deux composants (1, 2) et une liaison intime du matériau des deux composants (1, 2) étant établie au niveau atomique au niveau des surfaces de jonction (3, 4) sur toute la hauteur des deux composants (1, 2).

6. Ensemble de composants selon la revendication 5,
**caractérisé en ce que** la largeur de la zone de fusion (15) est inférieure à celle de la zone surélevée (6).

7. Ensemble de composants selon l'une des revendications 5 à 7, **caractérisé en ce que** la zone surélevée (6) a la forme d'une baguette ou d'une nervure.
